(19) **Europäisches Patentamt**

**European Patent Office**

**Office européen des brevets**

(11) **EP 0 811 472 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.⁷: **B29C 47/90**

(21) Anmeldenummer: **97109055.0**

(22) Anmeldetag: **04.06.1997**

(54) **Verfahren zum Kühlen, insbesondere Kalibrieren, von Kunststoffprofilen sowie Kalibriervorrichtung für eine Kunststoffextrusionsanlage**

Method of cooling and calibrating plastic profiles and cooling/calibrating apparatus for extruder

Procédé pour le refroidissement et le calibrage de profilés en matières synthétiques, et appareil de calibrage et de refroidissement pour une extrudeuse

(84) Benannte Vertragsstaaten:
**AT BE CH ES FR GB IT LI LU NL**

(30) Priorität: **04.06.1996 DE 19622419**

(43) Veröffentlichungstag der Anmeldung:
**10.12.1997 Patentblatt 1997/50**

(73) Patentinhaber: **Kömmerling Kunststoff GmbH**
**66954 Pirmasens (DE)**

(72) Erfinder: **Martin, Gerhard, Dr.**
**66953 Pirmasens (DE)**

(74) Vertreter: **Vièl, Christof, Dipl.-Ing.**
**Patentanwaltskanzlei**
**Viel & Wieske**
**Postfach 65 04 03**
**66143 Saarbrücken (DE)**

(56) Entgegenhaltungen:
**EP-A- 0 659 536        DE-A- 1 923 490**
**DE-A- 2 239 746        US-A- 3 538 210**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Kühlen, insbesondere Kalibrieren, von Kunststoffprofilen und die Verwendung einer Kalibriervorrichtung für eine Kunststoffextrusionsanlage für ein erfindungsgemäßes Verfahren.

Zum Naßkalibrieren von Kunststoffprofilen finden Sprüh- und Vollbäder Verwendung. Bei Sprühbädern werden die zu kühlenden und gegebenenfalls zu kalibrierenden Kunststoffprofile durch wasserdichte Gehäuse gefördert; in denen zum Aufbringen von Kühlflüssigkeit auf die Profiloberfläche Sprühdüsen angeordnet sind. Bei Vollbädern wird das Profil durch ein im Gehäuse befindliches Vollbad der Kühlflüssigkeit hindurchgefördert. Vereinzelt finden auch kombinierte Kühlverfahren Verwendung, Den bekannten Verfahren und Vorrichtungen liegt stets das Bestreben zugrunde, die Konvektionsströmung der Kühlflüssigkeit um das zu kühlende Profil so turbulent wie möglich zu gestalten, um den Wärmeübergang vom Kunststoffprofil zur Kühlflüssigkeit zu optimieren. Entsprechende Verfahren und Vorrichtungen sind beispielsweise aus der DE 195 04 981 A1. und der EP 0 659 537 A2 bekannt. Die Erzeugung eines turbulenten Strömungsbildes hat einen hohen Kühlflüssigkeitsverbrauch zur Folge, falls beispielsweise Frischwasser als Kühlflüssigkeit verwendet wird. Wird die Kühlflüssigkeit in einem geschlossenen Kreislauf gewälzt, sind hohe Pumpenleistungen erforderlich, um neben dem Kühlen und gegebenenfalls Reinigen der Kühlflüssigkeit eine turbulente Profilumströmung zu erzielen.

Die Erfindung hat es sich zur Aufgabe gemacht, ein extrudiertes Kunststoffprofil mit einem möglichst geringen Energieaufwand zu kühlen, insbesondere zu kalibrieren. Eine Kalibriervorrichtung für eine Kunststoffextrusionsanlage soll energieeffizient betrieben werden.

Diese Aufgabe wird durch die Gegenstände der Ansprüche 1 bis 4 gelöst.

Bei einem Verfahren zum Abkühlen, insbesondere Kalibrieren, eines extrudierten Kunststoffprofils, wie die Erfindung es betrifft, wird das Profil beim Fördern durch ein Vollbad einer Kühlflüssigkeit, in der es in eng an dem Profil anliegenden Führungen geführt wird, durch erzwungene Konvektion gekühlt.

Erfindungsgemäß wird im Vollbad die Reynoldszahl der Konvektion unterhalb der kritischen Reynoldszahl gehalten. Es hat sich Verblüffenderweise herausgestellt, und dies stellt gleichzeitig ein weiteres Merkmal der Erfindung dar, daß es bei unterkritischen Reynoldszahlen und damit einhergehender ruhiger Strömung im Kühlbad ausreicht, die deshalb von Hause aus laminare Strömungsgrenzschicht am Profil durch die Führungen, nämlich durch deren Führungsfunktion selbst, zu stören. Die Strömung im Kühlbad kann erfindungsgemäß vollkommen ruhig sein, soweit dies wegen des Hindurchförderns des Profils möglich ist. Überraschenderweise muß der Abstand zwischen den beim Hindurchfördern des Profils aneinander angrenzenden Konturen der Führungen und der Profiloberfläche nicht einmal enger sein, als dies bei bekannten Kühlvorrichtungen, insbesondere Kalibriervorrichtungen, der Fall ist. Die Führung streift entweder die Flüssigkeit in der Strömungsgrenzschicht am Profil oder, falls die Führung nicht bis in die Grenzschicht selbst hineinreicht, zumindest grenzschichtnah ab, wobei sich vor der Führung ein Rückstau bildet. Durch das Abstreifen der am Profil erwärmten Kühlflüssigkeit wird hinter der Führung frische, kalte Kühlflüssigkeit an die Profiloberfläche herangeführt. Durch den an der Führung sich bildenden Rückstau wird Kühlflüssigkeit umgelenkt und die Grenzschicht am Profil abgelöst. Die Strömung im Kühlbad ist jedoch nicht turbulent. Insbesondere werden, von dem genannten Abstreifen bzw. der Rückstauwirkung abgesehen, keine praktisch relevanten Strömungen quer zur Profilförderrichtung erzeugt.

Die erfindungsgemäße Art der Kühlung erfordert bei der bevorzugten Anwendung der Erfindung, nämlich dem Naßkalibrieren von extrudierten Kunststoffprofilen, insbesondere Fenster- und Türprofilen, auch keine Verlängerung der Kühlstrecke gegenüber herkömmlichen Kalibriereinrichtungn. Die üblichen Abstände zwischen den Kalibrierführungen im Kühlflüssigkeitsbad sind ausreichend klein, um hinsichtlich des Wärmeübergangs ausreichend effiziente Strömungszustände in der Grenzschicht des Profils einzustellen. In der Nähe des Einlasses in die Kühlstrecke sind die Abstände zwischen den aufeinanderfolgenden Führungen vorzugsweise nicht größer als 12 cm. Zum Auslaß hin können die Abstände zwischen je zwei aufeinanderfolgenden Führung größer werden, wie dies bei bekannten Naßkalibriereinrichtungen ebenfalls der Fall ist.

In einer bevorzugten Ausführungsform der Erfindung wird die Kühlflüssigkeit selbst wiederum extern gekühlt und gegebenenfalls gereinigt. Aufgrund der Erfindung kann hierbei der Massenstrom der umgewälzten Kühlflüssigkeit, d.h. die Menge der pro Zeiteinheit umgewälzten Kühlflüssigkeit, minimiert und dadurch der Kühlflüssigkeitsverbrauch gegenüber herkömmlichen Kühl- bzw. Kalibriereinrichtungen erheblich reduziert werden. Das Gleiche gilt für die erforderliche Pumpleistung, da der gerade erwähnte Massenstrom der Kühlflüssigkeit reduziert wird und ferner in der Kühlstrecke keine baulichen Maßnahmen getroffen werden müssen und vorzugsweise auch nicht getroffen werden, um ein möglichst turbulentes Strömungsbild zu erzeugen, wie dies jedoch bei bekannten Kühleinrichtungen geschieht. Es muß lediglich die durch das Abkühlen des Profils in die Kühlflüssigkeit eingebrachte Wärme abgeführt werden. Ein Umwälzen kann sogar gänzlich entfallen, d. h. Die Kühlflüssigkeit kann gegenüber der Umgebung ruhen, falls nämlich diese Wärme durch anderweitige Kühlung der Kühlflüssigkeit abgeführt werden kann, beispielsweise durch in das Kühlflüssigkeitsbad reichende Kühlflächen.

Ein bevorzugtes Ausführungsbeispiel der Erfindung wird nachfolgend anhand von Figuren erläutert. Es zeigen:

Fig. 1    eine Kalibriervorrichtung, die erfindungsgemäß betrieben wird und

Fig. 2    eine Fotografie einer erfindungsgemäß betriebenen Kalibriervorrichtung.

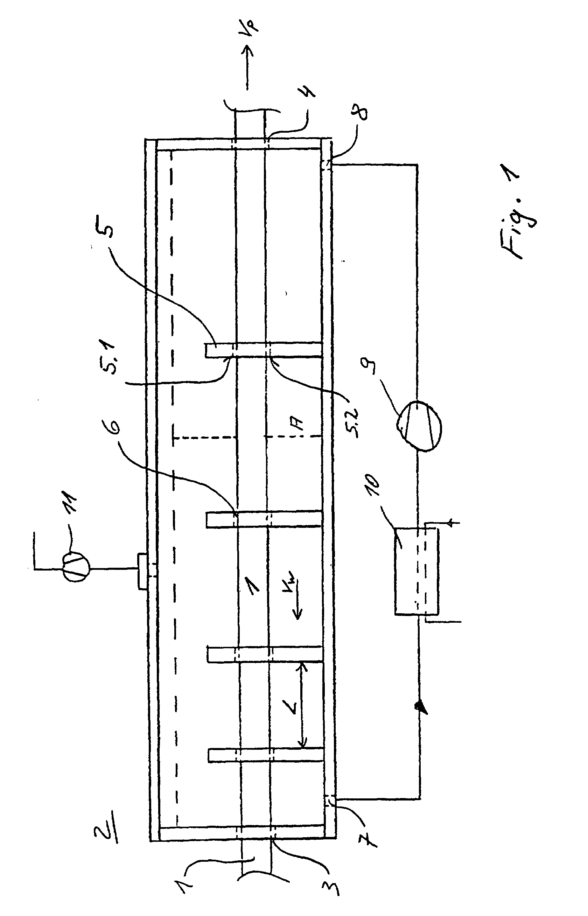

Fig. 1 zeigt eine Kalibriervorrichtung zum Naßkalibrieren eines endlos extrudierten, kontinuierlich geförderten Kunststoffhohlprofils 1. Das extrudierte Profil 1, das nach dem Extrudieren gegebenenfalls durch eine Trockenkalibrierstrecke gefördert worden ist, wird zwischen einem Profileinlaß 3 und einem Profilauslaß 4 durch ein mit einer Kühlflüssigkeit gefülltes Gehäuse 2 gefördert, durch Konvektion gekühlt und mittels bekannter Kalibrierführungen 5 kalibriert. Über der freien Flüssigkeitsoberfläche im Gehäuse 2 wird mittels einer Pumpe 11 ein Druck im Bereich von 0,01 bis 0,7 eingestellt. Da im Innern des Hohlprofils 1 Umgebungsdruck herrscht, wird das Profil 1 aufgeweitet und liegt eng an Durchlässen 6 der Führungen 5 an. Die freien Abstände L zwischen je zwei aufeinanderfolgenden Führungen 5 vergrößern sich vom Profileinlaß 3 bis zum Profilauslaß 4 des Gehäuses 2 von sehr kurzen Abständen von etwa 10 cm bis auf etwa 40 cm oder größer. Als Kühlflüssigkeit wird im Ausführungsbeispiel Wasser verwendet.

Die Kühlflüssigkeit wird zu ihrer eigenen Kühlung und gegebenenfalls Reinigung mittels einer Pumpe 9 in einem geschlossenen Kreis umgewälzt. Im Bereich des Profileinlasses 3 wird "warme" Kühlflüssigkeit mittels der Pumpe 9 durch einen Kühlflüssigkeitsauslaß 7 abgezogen, in einem externen Kühler 10 gekühlt und anschließend über einen Kühlflüssigkeitseinlaß 8 in der Nähe des Profilauslasses 4 dem Kühlflüssigkeitsbad wieder zugeführt. Der Kühlflüssigkeitsauslaß 7 und der Kühlflüssigkeitseinlaß 8 sind an einer Unterseite des Gehäuses 2 angeordnet; sie könnten auch seitlich, bevorzugt im unteren Bereich des Gehäuses, angeordnet sein. Die Kühlflüssigkeit wird im Ausführungsbeispiel im Gegenstrom zum Profil 1 geführt; sie kann nach der Erfindung jedoch durchaus im Mitstrom geführt werden.

Die Führungen 5 weisen außer ihren Durchtrittsöffnungen 6 für das Profil keine weiteren Öffnungen auf, etwa um die Kühlflüssigkeit zu verwirbeln, wofür immer auch Energie aufgewendet werden müßte. Die Führungen 5 sind vollkommen in der Kühlflüssigkeit eingetaucht, und es bleibt über Ihnen bis zur freien Flüssigkeitsoberfläche genügend Raum für einen im wesentlichen ungestörten Flüssigkeitsaustausch zum Umwälzen der Kühlflüssigkeit. Obgleich diese Ausgestaltung bevorzugt wird, wäre auch ein Austausch durch die Führungen 5 hindurch denkbar, wobei die dann vorzusehenden zusätzlichen Öffnungen nicht zur Turbulenzerzeugung, sondern lediglich dem möglichst ungestörten Flüssigkeitsaustausch dienen und dementsprechend gestaltet sein würden; es sollen keine oder doch so wenig wie möglich Strömungswiderstände erzeugt werden.

Zwischen den Führungen 5 wird, von der Abstreifwirkung und gegebenenfalls der Rückstauwirkung abgesehen, gegenüber dem Profil 1 keine Querströmung erzeugt; es bildet sich eine im wesentlichen eindimensionale Strömung ohne Querströmungskomponenten aus.

Der auf das Umwälzen der Kühlflüssigkeit zurückzuführende Geschwindigkeitsanteil $v_w$ der Strömungsgeschwindigkeit im Kühlbad berechnet sich bei der erfindungsgemäßen Verfahrensführung einfach nach der Formel

$$v_w = \dot{m}/\rho A,$$

wobei $\dot{m}$ die pro Zeiteinheit extern gekühlte Flüssigkeitsmenge, $\rho$ die spezifische Dichte der Kühlflüssigkeit bei der im Kühlflüssigkeitsbad herrschenden Temperatur und A die von der Kühlflüssigkeit eingenommene Querschnittsfläche, d.h. die Kontrollfläche, ist. Der Massenstrom $\dot{m}$ läßt sich bei vorgegebener Wärmekapazität der Kühlflüssigkeit, der abzuführenden Wärme und der Differenz der Temperaturen der Kühlflüssigkeit am Kühlflüssigkeitsauslaß 7 und am Kühlflüssigkeitseinlaß 8 berechnen. Der Massenstrom $\dot{m}$ ist nach der Erfindung nur so groß, wie dies zum Abführen der Wärme erforderlich ist und kann vergleichsweise klein gehalten werden, da die sich am Profil 1 beim erfindungsgemäßen Verfahren von Hause aus laminar bildende Grenzschicht nur durch die Führungen 5, insbesondere durch deren stromaufwärtigen Einlaufkanten, gestört und nicht zusätzliche Masse zum Zwecke einer Turbulenzerzeugung umgewälzt wird. In Figur 1 sind die in dieser Ansicht erkennbaren Einlaufkanten mit 5.1 und 5.2 bezeichnet.

Die Strömungsgeschwindigkeit $v_w$ der Kühlflüssigkeit relativ zum ruhenden Gehäuse 2 durch die mit A bezeichnete Kontrollfläche wird so gesteuert, daß die für die Strömungsgrenzschicht am Profil 1 maßgebliche Reynoldszahl unterhalb der kritischen Reynoldszahl liegt, bei der die laminare Grenzschichtströmung in eine turbulente Strömung umschlägt. Die Reynoldszahl für die Konvektionsströmung im Kühlflüssigkeitsbad wird unterhalb der kritischen Reynoldszahl gehalten, indem die Strömungsgeschwindigkeit $v_k$ der Kühlflüssigkeit relativ zum Profil 1 unterhalb der kritischen Strömungsgeschwindigkeit gehalten wird. Aus der bekannten Formel

$$Re = \frac{\rho \, v_k \, x}{\mu}$$

läßt sich für $v_k$ der kritische Wert in Kenntnis der kritischen Reynoldszahl leicht errechnen. Hierbei sind $\rho$ die

Dichte der Kühlflüssigkeit und μ deren dynamische Viskosität. Die Geschwindigkeit $v_k$ der Konvektionsströmung entspricht der Vektordifferenz ($v_w - v_p$), worin $v_p$ die Fördergeschwindigkeit des Profils 1 relativ zum Gehäuse 2 ist. Mit x ist eine charakteristische Länge, im Ausführungsbeispiel die Länge L zwischen zwei benachbarten Führungen 5 oder über die Querschnittsfläche A, bezeichnet. Die kritische Reynoldszahl beträgt etwa 2000, so daß mit den bekannten Stoffwerten ρ und μ und durch Vorgabe der charakteristischen Länge x als größtem Abstand zwischen zwei benachbarten Führungen 5 oder dem Querschnittsmaß die höchstzulässige Relativgeschwindigkeit $v_k$ ermittelt werden kann. Diese Betrachtungen sollen in erster Linie zeigen, daß es erfindungsgemäß nicht erforderlich ist, die Strömung im Kühlbad durch Zwangsmaßnahmen zu verwirbeln, also in Turbulenz zu versetzen. Es wird ganz im Gegenteil eine ruhige, widerstandsarme, Strömung eingestellt, die nur durch das unvermeidbare Hindurchfördern des Profils, zum einen durch die Kühlflüssigkeit selbst und zum anderen durch die eng anliegenden Führungen, gestört wird. Die Führungen selbst können vorteilhaft so geformt und angeordnet werden, daß sie darüberhinaus möglichst wenig Strömungswiderstände erzeugen.

Die Strömungsgeschwindigkeit $v_w$ der Kühlflüssigkeit relativ zum Gehäuse 2 muß lediglich so hoch sein, daß die aufgenommene Wärme im externen Kühler 10 weggekühlt werden kann. Vorzugsweise beträgt die Temperaturdifferenz der Kühlflüssigkeit 2 bis 10 K zwischen dem Kühlflüssigkeitsauslaß 7 und dem Kühlflüssigkeitseinlaß 8, besonders bevorzugt beträgt sie etwa 5 K oder weniger, so daß sich hieraus der für die Wärmeabfuhr erforderliche Massenstrom ṁ und daraus wiederum die Strömungsgeschwindigkeit $v_w$ der Kühlflüssigkeit berechnen und im Kühlflüssigkeitsbad einstellen lassen.

In Versuchen hat sich herausgestellt, daß sich der Massenstrom ṁ bei sonst herkömmlichen Kalibriervorrichtungen durch erfindungsgemäße Verfahrensführung bis auf ein Sechstel reduzieren läßt. Dementsprechend gering ist der Kühlflüssigkeitsverbrauch oder die zum Umwälzen erforderliche Pumpleistung. Zu dem Vorteil der Energieeinsparung und Wassereinsparung, falls Frischwasser als Kühlflüssigkeit verwendet wird, kommt noch hinzu, das der konstruktiv zu treibende Aufwand im Kühlbad und im Kühlkreis reduziert wird, so daß neben den Betriebskosten auch die Investitionskosten gegenüber herkömmlichen Anlagen gesenkt werden.

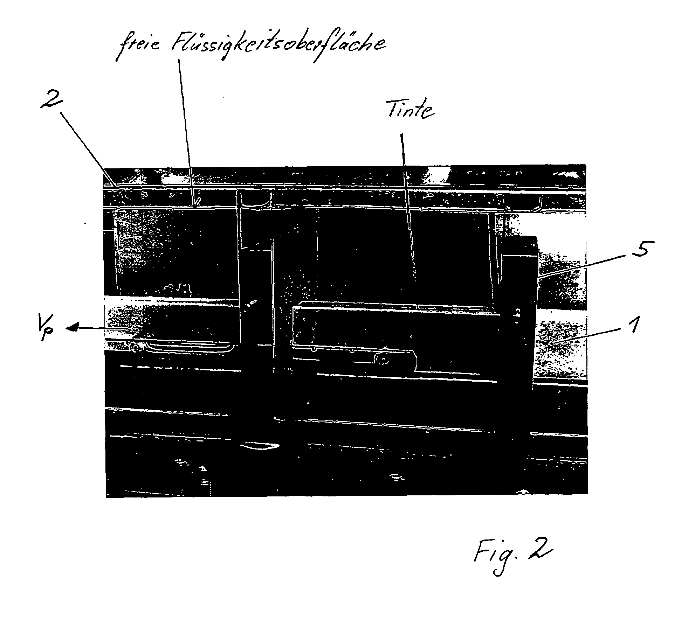

Auf der Fotografie nach Fig. 2 ist ein Abschnitt einer erfindungsgemäß betriebenen Kalibriervorrichtung zwischen zwei benachbarten Kalibrierführungen 5 abgebildet. Stromabwärts der in Fig. 2 rechten Führung 5 wird Tinte unmittelbar auf die Oberfläche des Profils 1 aufgegeben. Wie an der Tintenspur zu erkennen ist, ist die Konvektionsströmung im Gehäuse 2 bis auf die Profiloberfläche geschichtet und ruhig und somit laminar. Erst an den Einlaufkanten der stromabwärts nächstgelegenen, in Fig. 2 linken Führung 5 wird die anliegende Tintenspur abgestreift, wie dies an dem an dieser Führung 5 aufwärts strömenden Tintenstreifen zu sehen ist. Durch das Abstreifen oder durch den sich an den Einlaufkanten der Führung aufbauenden Flüssigkeitsrückstau oder eine Kombination aus beiden Wirkungen der Ein-laufkanten wird ein für die Kühlung vollkommen ausreichender Flüssigkeitsaustausch an der Profiloberfläche bewirkt.

**Patentansprüche**

1. Verfahren zum Abkühlen, insbesondere Kalibrieren, eines extrudierten Kunststoffprofils, bei dem

   a) das Profil (1) beim Fördern durch ein Vollbad einer Kühlflüssigkeit, in der es von eng an dem Profil (1) anliegenden Führungen (5) geführt wird, durch erzwungene Konvektion gekühlt wird,
   **dadurch gekennzeichnet, daß**
   b) die Reynoldszahl der Konvektionsströmung im gesamten Kühlbad unterhalb der kritischen Reynoldszahl gehalten wird,
   c) die deshalb am Profil (1) gebildete laminare Strömungsgrenzschicht oder zumindest die dieser laminaren Grenzschicht nahe Strömung durch die Führungen (5) abgestreift wird und daß
   d) die Strömung im Kühlbad von dem Abstreifen und gegebenenfalls einer Rückstauwirkung an Einlaufkanten der Führungen (5) abgesehen laminar ist.

2. Verwendung einer Kalibriervorrichtung für eine Kunststoffextrusionsanlage mit

   a.) einem eine Kühlflüssigkeit aufnehmenden Gehäuse (2), durch das ein Kunststoffprofil (1) gefördert und dabei konvektiv im Kühlflüssigkeitsbad gekühlt wird,
   b) Kalibrierführungen (5) für das Profil (1) und
   c) Mitteln (10) zum Kühlen der Kühlflüssigkeit für ein Verfahren gemäß Anspruch 1, wobei
   d) der Kühlflüssigkeitsstrom (m) im Gehäuse (2) aufgrund des Kühlens und gegebenenfalls Reinigens der Kühlflüssigkeit so gering eingestellt wird, daß die Reynoldszahl der Konvektionsströmung im gesamten Kühlbad (5) kleiner als die kritische Reynoldszahl ist, wobei
   e) die Strömung im Kühlbad von einem Abstreifen einer am Profil (1) gebildeten laminaren Strömungsgrenzschicht oder zumindest dieser laminaren Grenzschicht nahen Strömung und gegebenenfalls einer Rückstauwirkung an Einlaufkanten der Führungen (5) abgesehen laminar ist.

3. Verwendung gemäß Anspruch 2, **dadurch gekennzeichnet, daß** die Kühlflüssigkeit zu ihrer Kühlung zwischen einem Auslaß (7) und einem Einlaß (8) des Gehäuses (2) umgewälzt wird und dabei in einem externen Kühler (10) gekühlt wird und der Kühlflüssigkeitsstrom (m) durch den externen Kühler (10) gerade groß genug ist, um die vom Profil (1) aufgenommene Wärme abzuführen.

4. Verwendung gemäß Anspruch 3, **dadurch gekennzeichnet, daß** die Temperaturdifferenz zwischen dem Auslaß (7) und dem Einlaß (8) 2 bis 10 K, vorzugsweise 2 bis 5 K, beträgt.

## Claims

1. Method of cooling, and, in particular, of calibrating an extruded plastics profile, in which

   a) the profile (1), while being transported through an immersion bath of cooling liquid, in which it is guided by calibrators (5) that fit closely around the profile (1), is cooled by forced convection,
   **characterised in that**
   b) the Reynolds number for convection is kept below the critical Reynolds number, and
   c) the resulting laminar boundary layer surrounding the profile (1), or at least the flow near to the boundary layer, is stripped off by the calibrators (5).

2. Use of a calibration apparatus for a plastics extrusion line, having

   a.) a tank (2) containing a cooling liquid, through which a plastics profile (1) is conveyed and at the same time cooled by convection in the cooling bath,
   b) Calibrators (5) for the profile (1) and
   c) Means (10) for cooling the cooling liquid for a method according to claim 1, in which
   d) on account of the liquid being cooled and maybe cleaned, the mass flow rate (*m*) of the cooling liquid in the tank (2) can be set so low that the Reynolds number for the convection current is below the critical Reynolds number in the entire cooling bath, and
   e) apart from a stripping-off of a laminar boundary layer surrounding the profile (1), or at least of a flow near to this laminar boundary layer, and maybe also a damming-up effect at the inlet edges of the calibrators (5), the fluid stream in the cooling bath is laminar.

3. Use according to claim 2, **characterised in that** to cool the cooling liquid, it is circulated between an outlet (7) and an inlet (8) in the tank (2), being cooled in an external cooler (10), and the flow of cooling liquid (m) through the external cooler (10) is just large enough to permit the heat taken up from the profile (1) to be dissipated.

4. Use according to claim 3, **characterised in that** the temperature difference between the outlet (7) and the inlet (8) is 2 to 10 K, preferably 2 to 5 K.

## Revendications

1. Procédé pour le refroidissement, notamment le calibrage, d'un profilé en matière plastique extrudé, dans lequel

   a) le profilé (1) est refroidi par convection forcée en passant à travers un bain d'immersion contenant un liquide réfrigérant et dans lequel il est dirigé par des guides (5) placés très proche du profilé (1),
   **caractérisé en ce que**
   b) le nombre de Reynolds de la convection est maintenu en dessous du nombre de Reynolds critique et
   c) la couche limite laminaire du flux formée pour cela près du profilé (1) ou tout du moins le flux proche de la couche limite est écarté par les guides (5).

2. Utilisation d'un dispositif de calibrage pour une extrudeuse pour matière plastique avec

   a) un boîtier (2) recevant un liquide réfrigérant au travers duquel un profilé (1) en matière plastique est transporté et refroidi par convection dans le bain réfrigérant,
   b) des guides de calibrage (5) pour le profilé (1) et
   c) des moyens (10) pour refroidir le liquide réfrigérant,

   pour un procédé selon la revendication 1,

   d) le flux de liquide réfrigérant (m) dans le boîtier (2) étant réglé, en raison du refroidissement et le cas échéant du nettoyage du liquide réfrigérant, suffisamment faible pour que le nombre de Reynolds du flux de convection dans l'ensemble du bain de refroidissement (5) soit inférieur au nombre de Reynolds critique, et
   e) le flux dans le bain de refroidissement étant laminaire à l'exception d'un effet d'écartement d'une couche limite de flux laminaire formée sur le profilé (1) ou du moins du flux proche de cette couche limite laminaire et le cas échéant d'un effet de refoulement au niveau des bords d'admission des guides (5).

3. Utilisation selon la revendication 2, **caractérisée en ce que** le liquide réfrigérant circule pour son refroidissement entre une sortie (7) et une admission (8) du boîtier (2) et il est refroidi à cette occasion dans un dispositif de refroidissement externe (10) et le flux de liquide réfrigérant (m) à travers le dispositif de refroidissement externe (10) est juste suffisant pour évacuer la chaleur prélevée du profilé (1).

4. Utilisation selon la revendication 3, **caractérisée en ce que** la différence de température entre la sortie (7) et l'admission (8) est comprise entre 2 et 10 K, de préférence 2 et 5 K.

Fig. 1

EP 0 811 472 B1

freie Flüssigkeitsoberfläche

Tinte

2

5

1

$V_p$

Fig. 2